# EUROPEAN PATENT APPLICATION

(11) **EP 1 714 565 A1**
(43) Date of publication of application: **25.10.2006**
(21) Application number: 05425243.2
(22) Date of filing: 19.04.2005
(51) Int. Cl.: A23L 3/36, A23L 2/42, B01J 2/06, A23C 3/04

(54) **A method of instant deep freezing of fluids, in particular alimentary fluids, and means for carrying out the same**

(71) Applicant: Ortiz S.r.l., 70123 Bari (BA) (IT)
(72) Inventor: Oritz, Mario, 70123 Bari (BA) (IT)
(74) Representative: Sarpi, Maurizio

(57) **Abstract**

The present invention relates essentially to a method of instant deep freezing of fluids, in which the instant deep freezing is accomplished by decreasing the initial temperature of the alimentary fluid to be deep frozen from a temperature of about +40°C to the temperature of -18°C by causing a film of alimentary fluid to flow in contact with surfaces steadily cooled at a process temperature of about -28°C. The fluid film undergoes an instant cooling from the initial temperature upon its storing in suitable containers upstream of the deep freezing tank till the deep freezing temperature which is preferably equal to -18°C. The spontaneous break into fragments or chips allows a foodstuff which can be stored almost like a liquid into containers having any shape and size to be provided.

## Description

The present invention relates to a novel industrial method of instant deep freezing of fluids, in particular for alimentary use, such as milk, juice, and puree, and is particularly suitable for providing a homogeneous deep frozen alimentary fluid and, at the same time, almost no proliferation of bacterial charges during the deep freezing process.

The most widespread alimentary fluid conservation methods are refrigeration, freezing, and deep freezing.

The first method, i.e. refrigeration, takes place from 0° to -10°C. During its action in foods, the growth of microorganisms responsible for the toxic infections and food poisoning is blocked as well as the growth of alterative microorganisms is partially prevented. This is a technique to preserve the natural freshness of foods for a short time.

The freezing (from -10°C to -18°C) causes the microbial growth to be blocked almost totally at -10°C and completely at -18°C.

In case large-size products have to be deep frozen, the freezing process is slowed down, thus causing large ice crystals to form inside food. Crystal break the cell walls and cause damages to the biological structure of alimentary fluids that upon thawing out undergo the loss of most nutritive substances.

The deep freezing occurs at temperature which are lower than or equal to -18°C. The total blockage of the microbial growth is caused instantaneously, moreover greater deep freezing rates allow the qualitative features of the alimentary fluids to be preserved. In fact, upon deep freezing, small ice crystals that do not spoil the structure of food are formed.

The quickness of the deep freezing process makes this technique most efficient under different aspects: the hygienic aspect to avoid the instant microbial growth as well as the qualitative aspect to preserve the original nutritive, organoleptic features of the fresh alimentary fluids.

As a result, deep freezing, among all of fresh alimentary fluid conservation methods, preserves the nutritive, organoleptic properties in time which are most similar to those of the freshly produced products.

Sometimes the present production methods provide for pasteurisation, i.e. the total knocking down of the bacterial charges which are present upon fluid production. The knocking down is accomplished by using steam at high temperature (180°C) to cause the core of the product to reach 80/85°C. The parameters (time and temperature) of this step are set according to size of the tanks to be treated. Within a few minutes the fluid is subjected to pasteurisation and then brought to the following deep freezing process.

Two different methods are presently used to carry out deep freezing: mechanical-tunnel and liquid-nitrogen methods. Also, the method is selected according to the characteristics of the fluid to be deep frozen. The liquid-nitrogen deep freezing is suggested because of the very low temperature of -99°C reached within an average deep freezing time of about five minutes. To cause the chill to reach gradually the core of the product, thus avoiding highly heterogeneous processes in the product upon deep freezing, it is necessary that the deep freezing takes place more slowly (15-20 minutes). To found at least a partial remedy for this defect, the mechanical-tunnel deep freezing is sometimes preferred as it allows a minimum temperature of -40°C to be reached, however, at a longer deep freezing time that does not permit the proliferation of bacterial colonies to be blocked.

From the foregoing it can be understood that the quickness of the deep freezing only can guarantee a long life to a refrigerated fluid, keeping at the same time all of the qualities of the fresh product unchanged.

The alimentary fluid deep freezing methods of the prior art do not allow an instant deep freezing of the treated products to be achieved. Such known methods, therefore, are based upon the cooling until a temperature of -18°C of alimentary fluids contained inside tanks or containers with essentially cylindrical shape that do not allow high cooling rates to be reached, thus giving rise to a long deep freezing time with the result of a proliferation of the bacterial charge and changes in the characteristics of the fresh product as well.

A further drawback of the known technique is that when the fluids deep frozen inside the tanks have to be drunk, it is necessary to grind them, thus needing further machines and relative working time and cost.

The main object of the present invention is to overcome completely the restrictions and the drawbacks of the prior art by providing a deep freezing method which allows the alimentary fluid deep freezing time to be strongly reduced.

A second object of the invention is to minimize the production cost of alimentary deep frozen fluids by allowing their storage also in small containers and by producing an alimentary deep frozen fluid having the same initial characteristics of the fresh product since the deep freezing.

A third object of the invention is to provide an apparatus which is able to carry out the method disclosed above.

These and other objects are accomplished by providing an alimentary fluid deep freezing method characterized by an essentially instant deep freezing step with a duration of a few seconds which is carried out by decreasing the initial temperature of the alimentary fluid, which is preferably not higher than +40°C, till the deep freezing temperature which is lower than or equal to -18°C.

Such sudden decrease in the temperature is accomplished by causing a film of alimentary fluid to be deep frozen to flow in contact with surfaces which are steadily cooled at a process temperature of about -28°C.

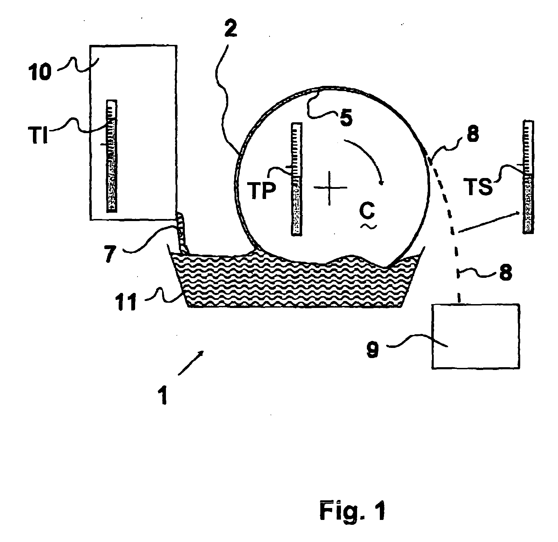

These objects and relevant advantages as well as the features of the method according to the present invention will be more readily apparent from the following detailed description of a preferred embodiment given only by way of a not limiting example with particular reference to the accompanying drawing in which figure 1 is a schematic view of a preferred embodiment of an apparatus for carrying out the method of deep freezing according to the invention.

With reference to figure 1 it is self-evident that the instant deep freezing method according to the present invention provides a film 2 of alimentary fluid 7 which is put directly in contact with a cooling surface 5 which is steadily kept at a temperature lower than or equal to -28°C by cooling means of the known type.

Thus, such film 2 undergoes an instant cooling from the initial temperature TI upon storage in containers 10 upstream of the deep freezing tank 11 to the deep freezing temperature TS lower than or equal to -18°C.

Film 2 of alimentary fluid 7 has preferably a very thin thickness which can vary according to the cooling rate to be reached.

In any case, the cooling rate of the alimentary fluid is such as to provide the deep freezing in a very few seconds from the contact of the fluid with cooling surface 5.

Initial temperature TI of the fluid mass can also be about +40°C, e.g. like the temperature of the just milked cow or cow buffalo milk.

The method is characterized by the instant deep freezing which takes place in a few seconds as the main innovative principle is to have applied the cooling method to very thin films 2 of alimentary fluid 7.

According to a peculiar feature of the invention, such just deep frozen films 2 undergo a spontaneous brittle fracture into a plurality of fragments or chips 8.

This spontaneous fracture in small fragments or chips 8 allows a foodstuff to be provided which can be stored essentially as a liquid into containers 9 having any shape and size.

By this method it is possible, for example, to deep freeze instantly the just milked milk in chips and at the same time to put it into small containers 9 to be sold by retail.

Furthermore, such deep freezing temperature TS of fragments or chips 8 allows the latter not to be stuck together but to stay still separated even if stockpiled in large or small containers 9 which permit the desired amount of chips to be drawn easily out.

In the embodiment shown, quick deep freezing apparatus 1 disclosed includes alimentary fluid deep freezing surfaces 5 having preferably a cylindrical shape with circular cross section and rotating (in clockwise or anticlockwise direction) about its longitudinal axis of symmetry both to come in touch with alimentary fluid 7 without interruption and to help the spontaneous fracture of the refrigerated fluid into fragments or chips 8. Fragments or chips 8 placed in such containers 9 are then stored into cold rooms at temperatures preferably between -18°C and -25°C.

More specifically, such quick deep freezing apparatus 1 is provided with a rotating cylinder C with a preferably horizontal axis, the cooling cylindrical surface 5 of which is partially dipped in the alimentary fluid 7 to be frozen which is contained in such deep freezing tank 11.

Advantageously, according to the present invention a method and a relevant instant deep freezing apparatus are provided which allow solid, deep frozen chips that can be easily stored in time to be provided from an initially liquid foodstuff by keeping at the same time the organoleptic characteristics and the freshness of the original foodstuff unchanged so that such chips can be easily thawed out when necessary to provide again a liquid foodstuff having the same initial characteristics as the fresh foodstuff.

It should be appreciated from the foregoing that according to the invention the exactly desired amount of deep frozen product can be thawed out as the latter is stored in chips 8 with granular shape and not in monolithic blocks.

As well as not requiring any grinding treatment, the product deep frozen into fragments or chips 8 has the further advantage of being put into envelopes as it is even in small amounts to be then stored in cold rooms at -20°C without the single fragments stick together because of the lack of humidity.

In addition, the granular shape of the product deep frozen by the method disclosed above allows it to be thawed out also in microwave ovens, which is particularly advantageous in case the present method is used to deep freeze milk or juice to be drunk under still fresh conditions in all seasons of the year without the addition of preservatives.

A further advantage of the present invention is to provide a very easy deep freezing method by the cooling of very thin films of alimentary fluid to be carried out by traditional technologies, thus minimizing the production and conservation cost of the deep frozen product.

Further advantages just follow from the easiness and the quickness of providing the deep frozen product.

It should be appreciated that the arrangement of the quick deep freezing apparatus disclosed above allows the deep freezing method to be carried out on a "non-stop" basis, i.e. without any interruption.

The deep freezing rate depends on the thickness of the film 2 as well as the difference in the temperature between alimentary fluid 7 and cooling surface 5.

It should also be appreciated that the technical solution of the deep freezing apparatus 1 provides that the thickness of film 2 is determined essentially by two factors: the viscosity of fluid 7 to be deep frozen and the rate of cooling surface 5 which can be adjusted by varying the speed of rotation of cylinder C.

In the end, it should be appreciated that the method and apparatus disclosed above can be used without any essential modification for any liquid both of alimentary or other kind to be deep frozen.

It is self-evident that a number of changes, adaptations, integrations, variations, and functionally equivalent replacements of components can be made to the embodiment previously disclosed by way of an illustrative, not limiting example without departing from the scope of the following claims.

## Claims

1. A method of deep freezing of fluids such as alimentary liquids (7), **characterized in that** in order to provide an essentially instant deep freezing of fluids by a treatment from their initial temperature (TI) to a deep freezing temperature (TS), a film (2) of fluid (7) to be deep frozen is put into contact with a cooling surface (5) which is kept steadily at a process temperature (TP) which is lower than the deep freezing temperature (TS) by at least 10°C.

2. The method according to the preceding claim, **characterized in that** the thickness of film (2) is such that it breaks spontaneously into a plurality of small fragments or chips (8) that can be easily treated like granular products to be gathered and/or packed into containers (9) of any shape and size.

3. The method according to any preceding claim, **characterized in that** the deep freezing temperature (TS) is equal to about -18°C.

4. The method according to any preceding claim, **characterized in that** the initial temperature (TI) of fluid (7) to be deep frozen is between +40°C and a temperature slightly higher than the freezing temperature of the fluid.

5. The method according to any preceding claim, **characterized in that** said process temperature (TP) is lower than or equal to -28°C, said process temperature (TP) varying as a function of alimentary fluid (7) to be deep frozen.

6. The method according to claim 2, **characterized in that** said fragments or chips (8) do not stick together but keep their essentially granular consistency if they are kept at a temperature lower than or equal to -18°C, thus providing that also a very small amount of said granular deep frozen product (8) can be taken out of containers (9) in which it is stored according to needs and standards of the large-and-small-scale retail trade.

7. The method of deep freezing of alimentary fluids according to the preceding claims, **characterized in that** said fragments or chips (8) are then stored into cold rooms at temperature between -18°C and -25°C according to the regulations in force concerning the food industry.

8. The method of deep freezing of alimentary fluids according to the preceding claims, **characterized in that** said film (2) of fluid (7) to be deep frozen is provided by dipping partially the side surface (5) of a rotating cylinder (C) into a tank (11) containing fluid (7) to be deep frozen, said side surface being kept at the process temperature (TP).

9. The method according to the preceding claim, **characterized in that** the thickness of the film (2) of fluid (7) to be deep frozen as well its deep freezing rate is changed by varying the speed of the cooling surface (5) so that the dipping time of the cooling surface (5) into fluid (7) to be deep frozen is changed.

10. An apparatus (1) for deep freezing of fluids (7) by the method according to the preceding claims, **characterized in that** it includes a rotating cylinder (C) with preferably horizontal axis, the cooling cylindrical surface (5) of which is partially dipped into an alimentary fluid or liquid (7) contained in a deep freezing tank (11), thus providing that a film (2) of fluid (7) to be deep frozen is formed on said cylindrical surface so as to be deep frozen suddenly, whereupon it breaks off the cooling surface (5) into chips or small fragments (8).

11. The apparatus according to the preceding claim, **characterized in that** the thickness of said film (2) is adjusted by varying the speed of rotation of rotating cylinder (C).

12. The apparatus according to the preceding claim, **characterized in that** it includes a container (9) to gather the deep frozen foodstuff, in which the chips or small fragments (8) that break off the cooling surface (5) spontaneously fall by gravity.
